# FASCICULE DE BREVET EUROPEEN

(11) **EP 3 735 363 B1**
(45) Date de publication et mention de la délivrance du brevet: **03.08.2022**
(21) Numéro de dépôt: 18839690.7
(22) Date de dépôt: 13.12.2018
(51) Int. Cl.: B60R 16/02, H02G 3/04

(54) **DISPOSITIF D'ATTACHE ET DE GUIDAGE POUR FAISCEAUX ÉLÉCTRIQUES CHEMINANT ENTRE UN LONGERON ET SA GARNITURE D'HABILLAGE**
BEFESTIGUNGS- UND FÜHRUNGSVORRICHTUNG FÜR KABELBÄUME, WELCHE SICH ZWISCHEN EINEM LÄNGSTRÄGER UND SEINER VERKLEIDUNGSGARNITUR ERSTRECKT
ATTACHING AND GUIDING DEVICE FOR CABLE BUNDLES WHICH TRAVEL BETWEEN A SPAR AND THE TRIM LINING THEREOF

(30) Priorité: 05.01.2018 FR 1850072
(43) Date de publication de la demande: 11.11.2020
(73) Titulaire: PSA Automobiles SA, 78300 Poissy (FR)
(72) Inventeur: COMFAITS, Virginie, 78990 ELANCOURT (FR); LLORET, David, 91360 VILLEMOISSON SUR ORGE (FR); FAGET, Sebastien, 95220 HERBLAY (FR)
(86) Numéro de dépôt international: PCT/FR2018/053244
(87) Numéro de publication internationale: WO 2019/135035

(56) Documents cités:
- JP-A- S6 481 610
- US-A1- 2003 159 846
- US-A1- 2005 241 715
- US-A1- 2014 224 520

## Description

### Domaine de l'invention

La présente invention concerne d'une manière générale la problématique du cheminement des faisceaux électriques dans les véhicules automobiles. Elle vise en particulier un dispositif d'attache et de guidage pour de tels faisceaux cheminant entre un longeron et une garniture de seuil de porte.

### Arrière-plan de l'invention

La structure de caisse d'un véhicule automobile doté de deux rangées de sièges comprend classiquement sur chacun de ses côtés latéraux deux ouvertures destinées à accueillir respectivement une porte avant et une porte arrière.

Chaque ouverture de porte avant est délimitée inférieurement par un longeron avant, latéralement par un pied avant et un pied milieu s'étendant tous les deux sensiblement au droit de ce longeron avant, et supérieurement par un brancard avant.

Chaque ouverture de porte arrière est délimitée inférieurement par un longeron arrière, latéralement par un dit pied milieu et un pied arrière s'étendant tous les deux sensiblement au droit de ce longeron arrière, et supérieurement par un brancard arrière.

Tel que décrit notamment dans la demande de brevet française FR 3 020 613 et afin de masquer ces différents éléments de carrosserie délimitant les ouvertures de portes avant et arrière, ces derniers sont recouverts de garnitures d'habillage en matière plastique leur étant fixés rigidement.

US 2014/224520 divulgue un dispositif d'attache et de guidage pour faisceaux électriques selon le préambule de la revendication 1.

En outre et de manière à alimenter électriquement certains dispositifs électriques implantés dans l'habitacle (tels que par exemple des boutons ou manettes de commande, des vitres électriques, des moyens d'éclairage et/ou des fusibles) soit entre eux, soit avec d'autres moyens électriques disposés dans le compartiment moteur du véhicule, une pluralité de faisceaux de raccordement électriques cheminent le long des longerons avant et arrière entre ces derniers et leurs garnitures correspondantes.

Ces faisceaux de raccordement électriques, raccordés au faisceau d'alimentation principal du véhicule relié à la batterie, se présentent généralement sous la forme de torons cylindriques comportant chacun une enveloppe semi-rigide logeant une pluralité de conducteurs souples.

Les véhicules automobiles ayant tendance à comporter de plus en plus d'équipements électriques ou électroniques (sondes, capteurs, calculateurs, etc...) associés à de nouvelles fonctionnalités, le diamètre de ces faisceaux de raccordement cheminant le long des longerons augmentent en conséquence ce qui complique leur intégration.

Cette dernière s'avère en outre d'autant plus complexe que ces garnitures de longeron comprennent généralement des éléments internes de renfort mécanique (tels que des nervures) leur permettant de résister sans se déformer aux nombreuses sollicitations qu'elles subissent (les usagers y prenant appui de toute leur masse lorsqu'ils pénètrent ou sortent du véhicule, ou lorsqu'ils chargent des bagages sur la galerie de toit afin d'élever leur champ de vision).

Afin de faciliter la mise en place de ces faisceaux électriques, il est connu d'augmenter l'espace disponible entre les longerons et leurs garnitures en surélevant les garnitures de longerons de quelques centimètres.

Malheureusement, une telle solution a pour inconvénient de réduire la hauteur des ouvertures destinées à accueillir les portes avant et arrière, ce qui nuit à l'accessibilité et à l'ergonomie du véhicule.

### Objet et résumé de l'invention

La présente invention vise donc à améliorer la situation.

Elle propose à cet effet un dispositif d'attache et de guidage pour faisceaux électriques cheminant entre un longeron et une garniture d'habillage le recouvrant ;
caractérisé en ce que ledit corps comporte une seconde goulotte longitudinale à section en U accolée à la dite première goulotte, prévue pour accueillir un second dit faisceau électrique, et comprenant une semelle et deux parois latérales, la seconde goulotte comportant une semelle ainsi que deux parois latérales dont l'une se confond ici avec la paroi latérale de la goulotte interne de sorte à constituer une cloison de séparation entre ces deux goulottes.

Le dispositif d'attache et de guidage selon l'invention permet d'optimiser l'espace interne entre un longeron de véhicule automobile et la garniture d'habillage le recouvrant en guidant le cheminement d'au moins un faisceau y circulant dans une goulotte.

En outre, la présence des moyens de couverture aptes à fermer au moins la majeure partie de cette goulotte permet d'assurer une excellente protection du faisceau y étant logé. Ce dernier peut ainsi être dépourvu d'enveloppe périphérique semi-rigide (les différents conducteurs formant ce faisceau étant alors simplement maintenus entre eux par des colliers de serrage) ce qui permet de réduire sa section pour un nombre de connecteurs identique et d'adapter la forme de cette section à celle de la goulotte de sorte à optimiser l'utilisation de l'espace disponible.

Selon des caractéristiques préférées du dispositif d'attache et de guidage selon l'invention, prises seules ou en combinaison :
- lesdits moyens de couverture comportent deux couvercles articulés chacun à ladite première goulotte par une charnière élastique correspondante et étant aptes à fermer respectivement une partie avant et une partie arrière de ladite première goulotte ;
- ledit corps comporte une seconde goulotte longitudinale à section en U accolée à la dite première goulotte, prévue pour accueillir un second dit faisceau électrique, et comprenant une semelle et deux parois latérales ;
- ledit corps comprend une pluralité d'organes de retenue déformables élastiquement, saillant à l'intérieur de ladite seconde goulotte depuis ses deux parois latérales en étant espacés longitudinalement les uns des autres de sorte à assurer la retenue dudit second faisceau après son introduction à force dans ladite seconde goulotte ;
- ledit corps comporte une pluralité de guides saillant depuis la face extérieure de l'une des parois latérales de ladite seconde goulotte en étant espacés longitudinalement les uns des autres et prévus pour supporter un tuyau cheminant le long dudit longeron ;
- ledit corps comporte des moyens de centrage permettant d'assurer son positionnement adéquat avant sa fixation sur ledit longeron, lesdits moyens de centrage comprenant au moins deux pions situés à proximité de ses deux extrémités longitudinales et prévus pour venir s'insérer au travers d'orifices correspondants ménagés dans ledit longeron ;
- ledit corps comporte des moyens d'encliquetage permettant d'y fixer au moins un élément de ladite garniture d'habillage recouvrant ledit longeron, lesdits moyens d'encliquetage comportant une pluralité d'orifices ménagés sur ledit toit de ladite première goulotte et destinés à recevoir des harpons de clipsage correspondants solidaires d'un au moins dit élément de ladite garniture d'habillage ;
- ladite première goulotte comporte une pluralité de nervures transversales s'étendant depuis ledit toit, entre ses deux parois latérales et étant espacées longitudinalement les unes des autres ;
- ledit corps comprend une pluralité de pattes de maintien en L saillant depuis la face extérieure de l'une des parois latérales de ladite première goulotte en étant espacés longitudinalement les unes des autres, et prévues pour coopérer avec des lumières respectives ménagées dans la partie supérieure d'un rebord latéral correspondant d'un tapis de couverture du plancher dudit véhicule ; et/ou
- ledit corps comporte une extension prolongeant vers le bas la partie centrale de l'une des parois latérales de ladite première goulotte et portant au moins un pied saillant depuis sa face extérieure et prévu pour soutenir une partie intermédiaire courbée d'un rebord latéral correspondant d'un tapis de couverture du plancher dudit véhicule.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente la partie inférieure d'un côté latéral d'une structure de caisse de véhicule automobile dotée de deux ouvertures avant et arrière destinées à accueillir respectivement une porte avant et une porte arrière ;
- la figure 2 est une vue de dessus du longeron avant délimitant inférieurement l'ouverture avant, ce longeron étant dépourvu de sa garniture d'habillage de sorte à laisser apparaitre le dispositif d'attache et de guidage pour faisceaux électrique selon l'invention ;
- la figure 3 représente une vue de trois quart en perspective de dessus du dispositif de la figure 2 ;
- la figure 4 est une vue de trois quart en perspective de dessus du dispositif de la figure 2 ;
- la figure 5 représente une vue de dessus du dispositif de la figure 2 ;
- les figures 6 à 8 sont des vues en coupes transversales du dispositif de la figure 2 en configuration montée, respectivement selon les plans VI, VII et VIII de la figure 5 ;
- la figure 9 représente une vue partielle en perspective de dessous du dispositif de la figure 2 en configuration montée ; et
- la figure 10 est une vue partielle en perspective du côté interne du dispositif de la figure 2 en configuration montée et sur laquelle les garnitures d'habillage recouvrant le longeron avant ont été omis afin de faciliter la lecture.

### Description détaillée d'un mode préféré de réalisation

Dans la description qui va suivre et par convention, les termes « inférieur », « supérieur », « longitudinal » « latéral » et « transversal » seront définis par rapport à la position de montage du dispositif d'attache et de guidage selon l'invention dans un véhicule.

Les termes « externe » et « interne » seront quant à eux utilisés pour définir la position relative d'un élément par référence à l'axe longitudinal du véhicule. L'élément le plus proche de cet axe sera ainsi qualifié d'interne par opposition à l'autre élément plus éloigné de ce même axe qui sera quant à lui qualifié d'externe.

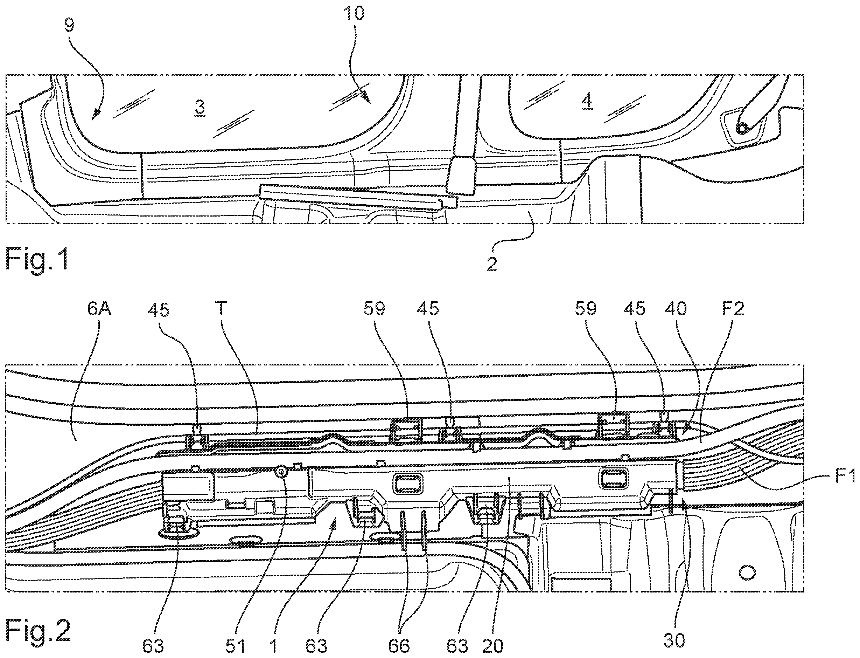

Le véhicule automobile dont la figure 1 ne montre qu'une petite partie, comporte une structure de caisse sur la partie inférieure de laquelle repose un plancher sensiblement horizontal recouvert d'une moquette ou d'un tapis 2.

Cette structure de caisse comprend sur chacun de ses côtés latéraux deux ouvertures avant 3 et arrière 4 destinées à accueillir respectivement une porte avant et une porte arrière non représentées.

Chaque ouverture avant 3 est délimitée inférieurement par un longeron avant, latéralement par un pied avant et un pied milieu s'étendant tous les deux sensiblement au droit de ce longeron avant, et supérieurement par un brancard avant.

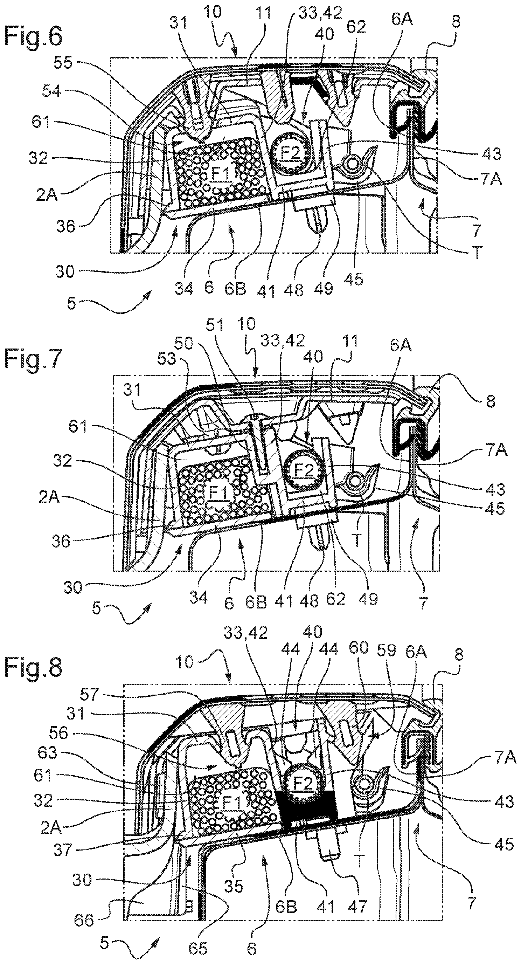

Comme illustré sur les figures 6 à 8, chaque longeron avant 5 comprend une tôle interne à section en U 6 (tournée vers l'intérieur du véhicule) et une tôle externe 7 également à section en U (tournée vers l'extérieur du véhicule), ces deux tôles étant assemblées l'une à l'autre le long de leurs feuillures supérieures et inférieures (seules les feuillures supérieures 6A, 7A étant visibles sur les figures).

Un joint de porte 8 est positionné sur les feuillures supérieures pour permettre notamment d'insonoriser le véhicule et de garantir une étanchéité au niveau de la porte avant.

Afin de masquer les différents éléments de carrosserie délimitant chaque ouverture avant 3, ces derniers sont recouverts de garnitures d'habillage en matière plastique comprenant notamment :
- une garniture de pied avant 9 recouvrant principalement le pied avant et une partie avant de la paroi supérieure 6B de la tôle interne 6 du longeron avant 5 ; et
- une garniture de pied milieu 10 recouvrant principalement le pied milieu et les parties centrale et arrière de la paroi supérieure 6B de la tôle interne 6 du longeron avant 5, avec son extrémité avant qui chevauche en y étant encliquetée un tenon 11 (visible sur les figures 6 et 7) prolongeant vers l'arrière la garniture de pied avant 9, de sorte à assurer une continuité entre ces deux garnitures d'habillage.

Selon l'invention et tel qu'illustré sur les figures 2 et 6 à 8, un dispositif d'attache et de guidage 1 pour faisceaux électriques est intercalé le long de chaque longeron avant 5 entre la paroi supérieure 6B de sa tôle interne 6 et les portions des garnitures de pied avant 9 et de pied milieu 10 recouvrant cette tôle interne 6.

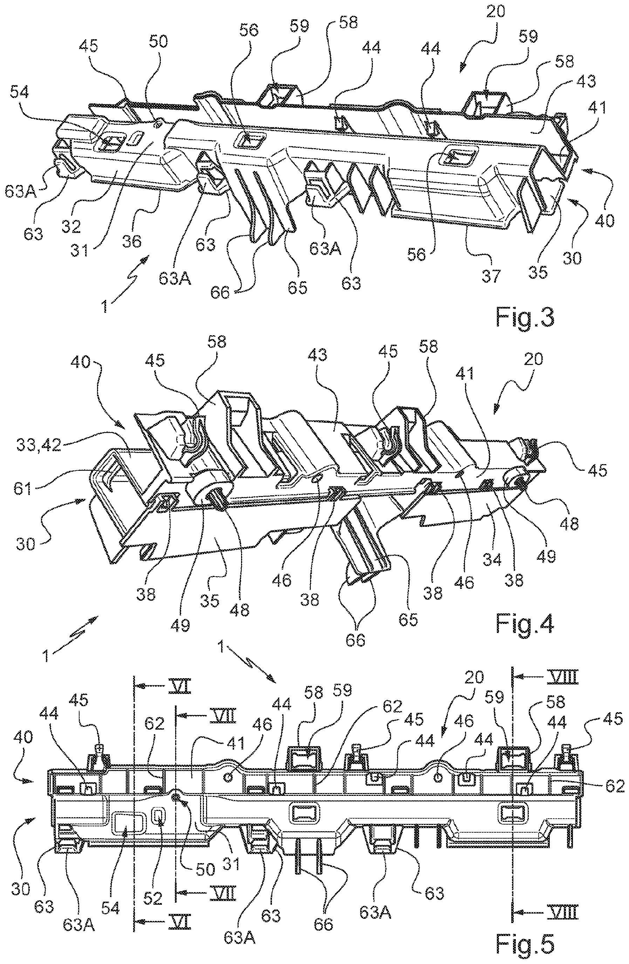

On va maintenant décrire, à l'appui des figures 3 à 5, le dispositif d'attache et de guidage 1 s'étendant le long du longeron avant 5 situé du côté passager (celui s'étendant le long du longeron avant côté conducteur et non représenté sur les figures lui étant globalement semblable).

Ce dispositif 1 comporte un corps principal allongé 20 prévu pour venir reposer contre et le long de la paroi supérieure 6B de la tôle interne 6 du longeron avant 5.

Venu avantageusement de moulage d'une seule pièce à partir d'un polymère thermoplastique tel que le polypropylène, le polyamide ou l'ABS (Acrylonitrile Butadiène Styrène), le corps principal 20 comporte une première goulotte longitudinale interne 30 et une seconde goulotte longitudinale externe 40 de moindre largeur accolées l'une à l'autre et destinées chacune à accueillir un faisceau électrique correspondant F₁ et F₂ (voir figure 2) cheminant le long du longeron avant 5 entre la paroi supérieure 6B de sa tôle interne 6 et les portions des garnitures de pied avant 9 et de pied milieu 10 recouvrant cette tôle interne 6.

La première goulotte interne 30, qui présente une section transversale en U inversé (c'est-à-dire dont l'ouverture est tournée vers le bas), comporte un toit 31 ainsi que deux parois latérales 32, 33.

Le corps 20 comprend également deux couvercles 34, 35 articulés chacun par l'un de leurs bords longitudinaux à l'extrémité libre de la paroi latérale 32 de la première goulotte 30 par une charnière élastique correspondante 36, 37, et étant aptes à fermer respectivement une partie avant et une partie arrière de cette première goulotte 30.

Chaque couvercle 34, 35 comprend en outre sur son bord longitudinal opposé à la charnière des pattes de clipsage 38 aptes à coopérer par encliquetage avec des dents ménagées à l'extrémité libre de la paroi latérale 33 de sorte à fermer la partie correspondante avant ou arrière de cette première goulotte interne 30.

Cette fermeture de la majeure partie de la goulotte 30 permet d'assurer une excellente protection du faisceau F₁ qui peut être dépourvu d'enveloppe périphérique semi-rigide, ce qui permet d'adapter sa section à celle de la goulotte 30 de sorte à optimiser l'utilisation de l'espace disponible.

Le fait que la partie centrale de cette première goulotte 30 demeure ouverte en permanence présente l'avantage de pouvoir faire sortir au droit du tapis 2 certains conducteurs du faisceau F1 pour venir alimenter certains dispositifs électriques du véhicule.

La seconde goulotte externe 40, qui présente une section transversale en U (c'est-à-dire dont l'ouverture est tournée vers le haut), comporte une semelle 41 ainsi que deux parois latérales 42, 43 dont l'une 42 se confond ici avec la paroi latérale 33 de la goulotte interne 30 de sorte à constituer une cloison de séparation entre ces deux goulottes 30, 40.

Tels qu'illustré notamment sur les figures 3, 5 et 8, le corps 20 comprend une pluralité d'organes de retenue déformables élastiquement 44, saillant à l'intérieur de la seconde goulotte 40 depuis ses deux parois latérales 42, 43 en étant espacés longitudinalement les uns des autres de sorte à assurer la retenue du faisceau F2 après son introduction à force dans cette dernière.

Le corps principal 20 comporte également de manière avantageuse trois guides en forme de crochets 45 saillant depuis la face extérieure de la paroi latérale externe 43 de cette seconde goulotte 40 en étant espacés longitudinalement les uns des autres et prévus pour supporter un tuyau T cheminant le long du longeron avant 5 et destiné par exemple à alimenter en liquide de lavage le dispositif de lavage de la lunette arrière du véhicule.

Tel qu'illustré par les figures 4, 5 et 8, le corps principal 20 présente deux orifices circulaires 46 ménagés dans la semelle 41 de la seconde goulotte externe 40 pour permettre d'assurer sa fixation sur la paroi supérieure 6B de la tôle interne 6 du longeron avant 5 à l'aide de vis 47 traversant également des trous correspondants ménagés dans cette paroi 6B.

En référence aux figures 4, 6 et 7, ce corps principal 20 comprend également des moyens de centrage destinés à assurer son positionnement adéquat avant sa fixation par vissage sur la paroi supérieure 6B de la tôle interne 6 du longeron avant 5 tout en limitant les bruits parasites au niveau du dispositif 1 du fait des vibrations générées lors du roulage du véhicule.

Ces moyens de centrage comportent deux pions à section en croix et à bout pointu 48 situés à proximité des deux extrémités longitudinales du corps 20 en saillant verticalement vers le bas depuis la semelle 41 de la seconde goulotte externe 40 et prévus pour venir s'insérer au travers d'orifices correspondants ménagés dans cette paroi 6B.

De manière avantageuse, le dispositif d'attache et de guidage 1 comporte, outre le corps 20, deux anneaux en mousse 49 entourant la partie supérieure des pions 48 et destinés à venir reposer contre le pourtour des orifices de la paroi 6B recevant ces pions 48 de sorte à améliorer l'étanchéité acoustique.

Tel qu'illustré par les figures 3, 5 et 7, le corps principal 20 comporte également dans sa partie avant un fût de fixation légèrement tronconique 50 s'étendant verticalement vers le bas depuis le toit 31 de la première goulotte interne 30 et à proximité de sa paroi latérale 33 formant cloison de séparation avec la seconde goulotte 40.

Ce fût 50 présente un perçage de passage d'axe vertical permettant de fixer à l'aide d'une vis 51 le tenon 11 de la garniture de pied avant 9 sur le corps principal 20 du dispositif 1.

A proximité du fût 50, le toit 31 de la première goulotte interne 30 présente un orifice rectangulaire de centrage 52 prévu pour recevoir un pion de centrage à section en croix et à bout pointu 53 ménagé sur ce tenon 11.

En référence aux figures 3, 5 et 6, on remarquera que ce toit 31 présente également à proximité de l'orifice rectangulaire de centrage 52, une ouverture rectangulaire de passage 54 prévue pour être traversée par l'extrémité de l'un des harpons de clipsage 55 permettant de fixer par encliquetage sur le tenon 11 de la garniture de pied avant 9 l'extrémité avant de la portion de la garniture de pied milieu 10 recouvrant les parties médiane et arrière de la paroi supérieure 6B de la tôle interne 6 du longeron avant 5.

Tel qu'illustré par les figures 4, 6 et 7, ce corps principal 20 comprend également des moyens d'encliquetage pour y fixer cette même portion de la garniture de pied milieu 10.

Ces moyens d'encliquetage comprennent :
- deux orifices rectangulaires 56 à bords longitudinaux recourbés vers le bas, ménagés en partie centrale et arrière du toit 31 de la première goulotte longitudinale interne 30 et destinés à recevoir par encliquetage deux harpons de clipsage correspondants 57 solidaires de la garniture de pied milieu 10 ; et
- deux pilastres verticaux 58 saillant du côté externe de la paroi latérale 43 de la seconde goulotte 40, au niveau des deux orifices rectangulaires 56, et présentant à leurs sommets respectifs deux orifices rectangulaires 59 semblables aux orifices 56 et destinés à recevoir par encliquetage deux harpons de clipsage correspondants 60 solidaires de la garniture de pied milieu 10.

En référence aux figures 4, 5, 6 et 7, la première goulotte interne 30 comporte dans sa partie supérieure une pluralité de nervures transversales 61 s'étendant depuis le toit 31, entre les deux parois latérales 32, 33 et étant espacées longitudinalement les unes des autres.

En plus de renforcer la tenue mécanique de cette goulotte 30 soumise à des sollicitations importantes puisqu'elle supporte en partie les garnitures 9 et 10 sur lesquelles les passagers viennent prendre appui, on remarquera sur ces figures que ces nervures 61 assurent également un rôle protecteur pour le faisceau F₁ en l'empêchant de venir occuper la zone supérieure de la goulotte située dans laquelle saillent les extrémités inférieures des harpons de clipsage 55 de la garniture de pied milieu 10, de sorte que ces derniers ne puissent endommager ce faisceau F₁.

La seconde goulotte externe 40 comprend également dans sa partie inférieure une pluralité de nervures transversales de renfort 62 s'étendant depuis la semelle 41, entre les deux parois latérales 42, 43 et étant espacées longitudinalement les unes des autres.

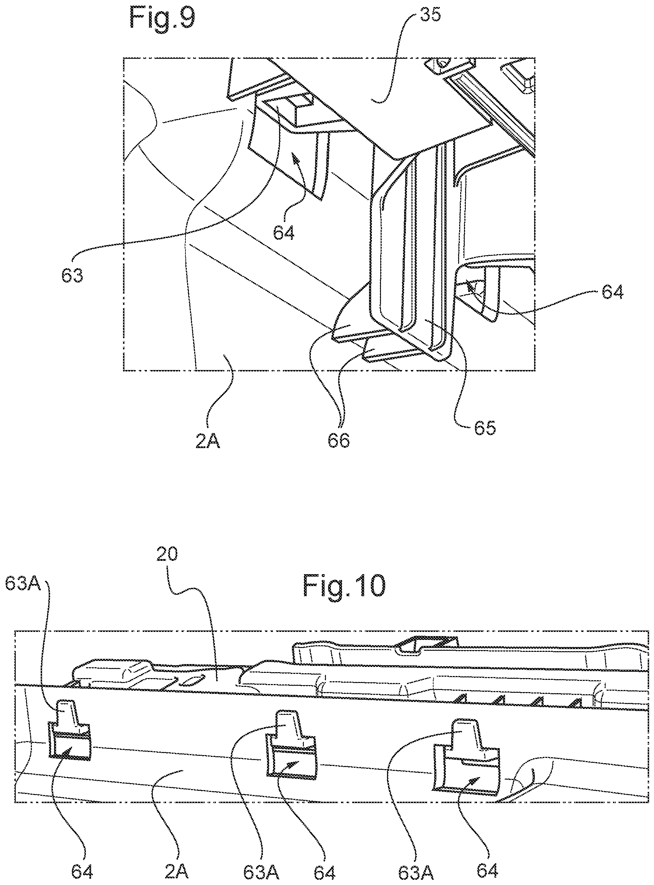

Tel qu'illustré par les figures 3, 5, 9 et 10, le corps principal 20 comprend également trois pattes de maintien 63 en L saillant en étant espacées longitudinalement les unes des autres depuis la face extérieure orientée du côté interne de la paroi latérale 31 de la première goulotte 30 et destinées à traverser trois lumières rectangulaires respectives 64 ménagées dans la partie supérieure verticale du rebord latéral correspondant 2A du tapis 2.

Ces trois pattes de maintien 63 sont dotées de rebords 63A orientés vers haut et prévus chacun pour coopérer avec le pourtour supérieur côté interne d'une lumière respective 64, de sorte à retenir transversalement la partie supérieure verticale du rebord latéral 2A du tapis 2.

On notera par ailleurs que la face externe de ce rebord latéral 2A du tapis 2 repose contre certaines portions de la paroi latérale 32 de la première goulotte longitudinale interne 30 correspondant à des parties plus larges de cette dernière, ainsi que contre les tranches de trois ailettes 64 saillant depuis la face extérieure orientée du côté interne de la paroi latérale 31 de la première goulotte 30 au niveau des parties plus étroites de cette dernière.

Tel qu'illustré par les figures 3, 4, 8 et 9, le corps principal 20 comporte également une extension 65 prolongeant vers le bas la partie centrale de la paroi latérale 31 de la première goulotte 30.

Cette extension 65 porte deux pieds 66 saillant depuis sa face extérieure orientée du côté interne et prévus pour soutenir une partie intermédiaire courbée du rebord latéral 2A du tapis 2.

Selon des variantes de réalisation non représentés de l'invention, le corps principal du dispositif d'attache et de guidage est dépourvu de seconde goulotte.

Selon d'autres variantes de réalisation non représentées :
- le corps principal présente une seule couverture s'étendant sur toute la longueur de la première goulotte et apte à la fermer entièrement ;
- le corps principal est dépourvu des guides en forme de crochets ou leur nombre est différent (par exemple égal à quatre) ;
- les moyens de fixation dudit corps sur le longeron sont différents ;
- les moyens de centrage dudit corps sur le longeron et/ou leur nombre sont différents ;
- les moyens de fixation dudit corps sur le tenon de la garniture de pied avant sont différents (par exemple de type par encliquetage) ;
- les moyens de fixation dudit corps sur les garnitures d'habillage et/ou leur nombre sont différents (le corps peut par exemple être dépourvu des pilastres verticaux) ;
- les pattes de maintien du rebord latéral du tapis et/ou leur nombre sont différents ; et/ou
- le corps est dépourvu d'extension portant des pieds de soutien pour le tapis.

D'une manière générale, on rappelle que la présente invention ne se limite pas aux formes de réalisation décrites et représentées, mais qu'elle englobe toute variante d'exécution à la portée de l'homme du métier.

En particulier, le dispositif d'attache et de guidage selon l'invention pourrait également être utilisé le long des longerons arrière délimitant inférieurement les portes arrière d'un véhicule.

## Revendications

1. Dispositif d'attache et de guidage pour faisceaux électriques cheminant entre un longeron (5) et une garniture d'habillage (9, 10) le recouvrant ; ledit dispositif comportant un corps principal allongé (20) destiné à être fixé par l'intermédiaire de moyens de fixation (46) contre et le long dudit longeron (5) entre ce dernier et ladite garniture d'habillage (9, 10), ledit corps (20) comprenant une première goulotte longitudinale à section en U inversé (30) prévue pour accueillir un premier dit faisceau électrique (F₁) et comprenant un toit (31) et deux parois latérales (32, 33), ledit corps (20) comprenant également des moyens de couverture (34, 35) montés articulés sur ladite première goulotte (30) et aptes à fermer au moins la majeure partie de cette dernière, ledit dispositif d'attache et de guidage étant **caractérisé en ce que** ledit corps (20) comporte une seconde goulotte longitudinale à section en U (40) accolée à la dite première goulotte (30), prévue pour accueillir un second dit faisceau électrique (F₂), et comprenant une semelle (41) et deux parois latérales (42, 43), la seconde goulotte comportant une semelle (41) ainsi que deux parois latérales (42, 43) dont l'une (42) se confond ici avec la paroi latérale (33) de la goulotte interne (30) de sorte à constituer une cloison de séparation entre ces deux goulottes (30, 40).

2. Dispositif d'attache et de guidage selon la revendication 1, **caractérisé en ce que** lesdits moyens de couverture comportent deux couvercles (34, 35) articulés chacun à ladite première goulotte (30) par une charnière élastique correspondante (36, 37) et étant aptes à fermer respectivement une partie avant et une partie arrière de ladite première goulotte (30).

3. Dispositif d'attache et de guidage selon la revendication 1 ou 2, **caractérisé en ce que** ledit corps (20) comprend une pluralité d'organes de retenue déformables élastiquement (44), saillant à l'intérieur de ladite seconde goulotte (40) depuis ses deux parois latérales (42, 43) en étant espacés longitudinalement les uns des autres de sorte à assurer la retenue dudit second faisceau (F₂) après son introduction à force dans ladite seconde goulotte (40).

4. Dispositif d'attache et de guidage selon l'une des revendications 1 ou 2 ou 3, **caractérisé en ce que** ledit corps (20) comporte une pluralité de guides (45) saillant depuis la face extérieure de l'une (43) des parois latérales (42, 43) de ladite seconde goulotte (40) en étant espacés longitudinalement les uns des autres et prévus pour supporter un tuyau (T) cheminant le long dudit longeron (5).

5. Dispositif d'attache et de guidage selon l'une des revendications 1 à 4, **caractérisé en ce que** ledit corps (20) comporte des moyens de centrage (48) permettant d'assurer son positionnement adéquat avant sa fixation sur ledit longeron, lesdits moyens de centrage comprenant au moins deux pions (48) situés à proximité de ses deux extrémités longitudinales et prévus pour venir s'insérer au travers d'orifices correspondants ménagés dans ledit longeron (5).

6. Dispositif d'attache et de guidage selon l'une des revendications 1 à 5 , **caractérisé en ce que** ledit corps (20) comporte des moyens d'encliquetage (56, 58, 59) permettant d'y fixer au moins un élément (10) de ladite garniture d'habillage (9, 10) recouvrant ledit longeron (5), lesdits moyens d'encliquetage comportant une pluralité d'orifices (56) ménagés sur ledit toit (31) de ladite première goulotte (30) et destinés à recevoir des harpons de clipsage correspondants (57) solidaires d'un au moins dit élément (10) de ladite garniture d'habillage (9, 10).

7. Dispositif d'attache et de guidage selon l'une des revendications 1 à 6, **caractérisé en ce que** ladite première goulotte (30) comporte une pluralité de nervures transversales (61) s'étendant depuis ledit toit (31), entre ses deux parois latérales (32, 33) et étant espacées longitudinalement les unes des autres.

8. Dispositif d'attache et de guidage selon l'une des revendications 1 à 7, **caractérisé en ce que** ledit corps (20) comprend une pluralité de pattes de maintien en L (63) saillant depuis la face extérieure de l'une (32) des parois latérales (32, 33) de ladite première goulotte (30) en étant espacés longitudinalement les unes des autres, et prévues pour coopérer avec des lumières respectives (64) ménagées dans la partie supérieure d'un rebord latéral correspondant (2A) d'un tapis de couverture (2) du plancher dudit véhicule.

9. Dispositif d'attache et de guidage selon l'une des revendications 1 à 8, **caractérisé en ce que** ledit corps (20) comporte une extension (65) prolongeant vers le bas la partie centrale de l'une (32) des parois latérales (32, 33) de ladite première goulotte (30) et portant au moins un pied (66) saillant depuis sa face extérieure et prévu pour soutenir une partie intermédiaire courbée d'un rebord latéral correspondant (2A) d'un tapis de couverture (2) du plancher dudit véhicule.

## Patentansprüche

1. Befestigungs- und Führungsvorrichtung für elektrische Bündel, die zwischen einem Längsträger (5) und einer ihn überdeckenden Verkleidung (9, 10) verlaufen; Vorrichtung mit einem länglichen Hauptkörper (20) zur Befestigung durch Befestigungsmittel (46) an und entlang dem Längsträger (5) zwischen diesem und der Verkleidung (9, 10), wobei der Körper (20) eine erste Längsrinne (30) mit umgekehrtem U-Querschnitt aufweist, die zur Aufnahme eines ersten elektrischen Strahls (F1) vorgesehen ist und ein Dach (31) und zwei Seitenwände (32, 33) aufweist, wobei der Körper (20) ferner Abdeckmittel (34, 35) aufweist, die gelenkig an der ersten Rinne angebracht sind Lotte (30) und geeignet, zumindest den größten Teil davon zu schließen , wobei die Befestigungsund Führungsvorrichtung **dadurch gekennzeichnet ist, dass** der Körper (20 ) eine zweite Längsrinne mit U - förmigem an die erste Rinne (30) angeschlossen ist, die zur Aufnahme eines zweiten elektrischen Strahls (F2) vorgesehen ist und eine Sohle (41) und zwei Seitenwände (42, 43) aufweist, wobei die zweite Rinne eine Sohle (41) sowie zwei Seitenwände (42, 43) aufweist, von denen eine (42 ) konisch ist Hierbei ist mit der Seitenwand (33) der inneren Rinne (30) eine Trennwand zwischen den beiden Rinnen (30, 40) gebildet.

2. Vorrichtung zum Befestigen und Führen nach Anspruch 1, **dadurch gekennzeichnet , dass** die Abdeckmittel zwei Abdeckungen (34, 35) umfassen, die jeweils an der ersten Rinne (30) durch ein entsprechendes elastisches Scharnier (36, 37) angelenkt sind und geeignet , jeweils einen vorderen und einen hinteren Teil der ersten Rinne (30) zu schließen.

3. Befestigungs- und Führungsvorrichtung nach Anspruch 1 oder 2, **dadurch gekennzeichnet, dass** der Körper (20) eine Vielzahl von elastisch verformbaren Rückhalteelementen (44) aufweist, die in der zweiten Rinne (40) von ihren beiden Seitenwänden (42, 43) in Längsrichtung voneinander beabstandet vorstehen, um das Zurückhalten des zweiten Bündels (F2) nach seinem Eindrücken in die zweite Rinne (40) sicherzustellen.

4. Befestigungs- und Führungsvorrichtung nach einem der Ansprüche 1 oder 2 oder 3, **dadurch gekennzeichnet, dass** der Körper (20) eine Vielzahl von Führungen (45) aufweist, die von der Außenseite einer (43) der Seitenwände (42, 43) der zweiten Rinne (40) in Längsrichtung voneinander beabstandet vorstehen und vorgesehen sind, um ein Rohr (T) zu tragen, das entlang des Längsträgers (5) verläuft.

5. Vorrichtung zum Befestigen und Führen nach einem der Ansprüche 1 bis 4, **dadurch gekennzeichnet , dass** der Körper (20) Zentriermittel (48) umfasst, die es ermöglichen, seine geeignete Positionierung vor seiner Befestigung an dem Längsträger sicherzustelen mind , womitbei mind Zapfen (48) umfassen, mourir in der Nähe seiner beiden Längsenden angeordnet sind und dazu bestimmt sind, durch entsprechende Öffnungen in dem Längsträger (5) eingeführt zu werden.

6. Befestigungs- und Führungsvorrichtung nach einem der Ansprüche 1 bis 5, **dadurch gekennzeichnet, dass** der Körper (20) Rastmittel (56, 58, 59) aufweist, die es ermöglichen, mindestens ein Element (10) der Verkleidungspackung (9, 10) daran zu befestigen, das den Längsträger (5) bedeckt , wobei die Rastmittel eine Vielzahl von Öffnungen (56) aufweisen, die auf dem Dach (31) der ersten Rinne (30) ausgebildet sind und dazu bestimmt sind, entsprechende Clipsharpunen (57) aufzunehmen mindestens einem Element (10) der Verkleidung (9, 10).

7. Vorrichtung zum Befestigen und Führen nach einem der Ansprüche 1 bis 6, **dadurch gekennzeichnet, dass** die erste Rinne (30) eine Vielzahl von Querrippen (61) aufweist, die sich von dem Dach (31) zwischen seinen beiden Seitenwänden (32, 33 ) erstrecken und in Längsrichtung voneinander beabstandet sind.

8. Befestigungs- und Führungsvorrichtung nach einem der Ansprüche 1 bis 7, **dadurch gekennzeichnet, dass** der Körper (20) eine Vielzahl von L-förmigen Haltelaschen (63) umfasst, die von der Außenseite einer (32) der Seitenwände (32, 33) der ersten Rinne (30) in Längsrichtung voneinander beabstandet vorstehen und vorgesehen sind, um mit entsprechenden Öffnungen (64) zusammenzuwirken, die im oberen Teil eines entsprechenden Seitenflansches (2A) einer Deckmatte (2) des Bodens des Fahrzeugs ausgebildet sind.

9. Befestigungs- und Führungsvorrichtung nach einem der Ansprüche 1 bis 8, **dadurch gekennzeichnet, dass** der Körper (20) eine Verlängerung (65) aufweist, die den mittleren Teil einer (32) der Seitenwände (32, 33) der ersten Rinne (30 ) nach unten verlängert und mindestens einen Fuß (66) trägt, der von senneur Außenseite vorsteht und vorgesehen ist, um einen gekrümmten Zwischenabschnitt eines entsprechenden Seitenflansches (2A) einer Deckmatte (2) des Bodens des Fahrzeugs zu stützen.

## Claims

1. Fastening and guiding device for electric harnesses running between a longitudinal member (5) and a covering lining (9, 10); said device comprising an elongated main body (20) intended to be fixed by means of fixing means (46) against and along said longitudinal beam (5) between the latter and said covering lining (9, 10), said body (20) comprising a first longitudinal chute with inverted U-section (30) intended to receive a first said electrical beam (F1) and comprising a roof (31) and two side walls (32, 33), said body (20) also comprising cover means (34, 35) mounted articulated on said first chute head (30) and capable of closing at least the major part of the latter, said fastening and guiding device being **characterized in that** said body (20) comprises a second longitudinal channel with a U-shaped section (40) adjoining said first channel (30), designed to receive a second said electrical beam (F2), and comprising a sole (41) and two side walls (42, 43), the second channel comprising a sole (41) and two side walls (42, 43) one of which (42) merges here the side wall (33) of the inner chute (30) so as to form a partition between these two chutes (30, 40).

2. Fastening and guiding device according to claim 1, **characterized in that** said covering means comprise two covers (34, 35) each hinged to said first chute (30) by a corresponding elastic hinge (36, 37) and being able to close a front part and a rear part of said first chute (30) respectively.

3. A fastening and guiding device according to claim 1 or 2, **characterized in that** said body (20) comprises a plurality of resiliently deformable retaining members (44) projecting into said second chute (40) from its two side walls (42, 43) longitudinally spaced from each other so as to retain said second bundle (F2) after it is forcibly inserted into said second chute (40).

4. Fastening and guiding device according to one of Claims 1 or 2 or 3, **characterized in that** the said body (20) comprises a plurality of guides (45) projecting from the outer face of one (43) of the lateral walls (42, 43) of the said second chute (40), being spaced longitudinally from one another and provided to support a pipe (T) running along the said longitudinal member (5).

5. Fastening and guiding device according to one of Claims 1 to 4, **characterized in that** the said body (20) comprises centering means (48) making it possible to ensure its proper positioning before it is fixed to the said spar, the said centering means comprising at least two pins (48) located close to its two longitudinal ends and designed to be inserted through corresponding orifices formed in the said spar (5).

6. Fastening and guiding device according to one of Claims 1 to 5, **characterized in that** the said body (20) comprises snap-fastening means (56, 58, 59) enabling at least one element (10) of the said covering lining (9, 10) covering the said longitudinal member (5) to be fixed thereto, the said snap-fastening means comprising a plurality of orifices (56) provided on the said roof (31) of the said first chute (30) and intended to receive corresponding snap-fastening harpoons (57) integral with one another at least one element (10) of the lining (9, 10).

7. Fastening and guiding device according to one of claims 1 to 6, **characterized in that** said first chute (30) comprises a plurality of transverse ribs (61) extending from said roof (31), between its two side walls (32, 33) and being spaced longitudinally from one another.

8. Fastening and guiding device according to one of Claims 1 to 7, **characterized in that** the said body (20) comprises a plurality of L-shaped holding tabs (63) projecting from the outer face of one (32) of the lateral walls (32, 33) of the said first chute (30), being spaced longitudinally from one another, and provided to cooperate with respective slots (64) provided in the upper part of a corresponding lateral rim (2A) of a covering mat (2) of the floor of the said vehicle.

9. Fastening and guiding device according to one of Claims 1 to 8, **characterized in that** the said body (20) comprises an extension (65) extending downwards the central part of one (32) of the lateral walls (32, 33) of the said first chute (30) and carrying at least one foot (66) projecting from its outer face and designed to support a curved intermediate part of a corresponding lateral rim (2A) of a covering mat (2) of the floor of the said vehicle.
